# EUROPÄISCHE PATENTANMELDUNG

(11) **EP 4 075 122 A1**
(43) Veröffentlichungstag der Anmeldung: **19.10.2022**
(21) Anmeldenummer: 22163950.3
(22) Anmeldetag: 23.03.2022
(51) Int. Cl.: G01N 21/90

(54) **VORRICHTUNG UND VERFAHREN ZUM INSPIZIEREN VON DOSEN**

(30) Priorität: 14.04.2021 DE 102021109287
(71) Anmelder: Krones AG, 93073 Neutraubling (DE)
(72) Erfinder: Piana, Stefan, 93073 Neutraubling (DE); Kwirandt, Rainer, 93073 Neutraubling (DE)
(74) Vertreter: Bittner, Bernhard

(57) **Zusammenfassung**

Vorrichtung zum Inspizieren von Behältnissen (10) und insbesondere von Dosen (10), mit einer Beleuchtungseinrichtung (2), welche die zu inspizierende Dose (10) beleuchtet und Strahlung auf eine Bodeninnenwandung des Behältnisses (10) einstrahlt und mit einer Bildaufnahmeeinrichtung (4), welche wenigstens ein ortsaufgelöstes Bild der von der Beleuchtungseinrichtung beleuchteten Bodeninnenwandung aufnimmt. Erfindungsgemäß weist die Vorrichtung (1) in einem Strahlengang zwischen einer Lichtquelle der Beleuchtungseinrichtung (2) und der Bodeninnenwandung (10a) eine erste Polarisatoreinrichtung (12) auf, derart dass die auf die Bodeninnenwandung gelangende Strahlung polarisiert ist, wobei die Beleuchtungseinrichtung derart ausgebildet ist, dass ein überwiegender Anteil, der von der Beleuchtungseinrichtung in das Behältnis eingestrahlten Strahlung auf die Bodeninnenwandung trifft.

## Beschreibung

Die vorliegende Erfindung bezieht sich auf eine Vorrichtung und ein Verfahren zum Inspizieren von Behältnissen in der Lebensmittelindustrie und insbesondere von Dosen oder Getränkedosen. Aus dem Stand der Technik sind unterschiedliche Vorrichtungen und Verfahren zum Inspizieren von Behältnissen bekannt. Insbesondere die Inspektion von Dosen gestaltet sich im Stand der Technik üblicherweise als relativ schwierig, da diese einerseits nicht transparent sind und andererseits auch stark reflektierende (Innen) sowie strukturierte Oberflächen aufweisen.

Die Inspektion eines Doseninneren erfolgt im Stand der Technik üblicherweise mit einem weitwinkligen Innenwandobjektiv und einer Beleuchtung, welche die Dose möglichst gleichmäßig ausleuchtet. Zu diesem Zweck werden im Stand der Technik großflächige Lampen eingesetzt, welche in die Dosenmündung mit möglichst vielen Lichtrichtungen einstrahlen. Auf diese Weise werden in der Regel Fremdkörper aufgefunden, die in dem Bild eine Abdunklung erzeugen.

Da Dosen bei ihrer Anlieferung oft mit durchsichtigen Folien verpackt werden, geraten auch Folienfetzen als Fremdkörper in die Dosen. Derartige Folien sind sehr problematisch zu detektieren, da sie klar bzw. durchsichtig sind.

Aus dem internen Stand der Technik der Anmelderin ist es bekannt, in der Inspektionstechnik polarisiertes Licht einzusetzen, mit dem polarisierte Folien erkannt werden können. Allerdings sind nicht alle Folien stark polarisierend. Einige polarisieren gar nicht oder nur wenig. Für die wenig polarisierenden Folien wäre an sich ein Dunkelfeld-Verfahren vorteilhaft, welches jedoch üblicherweise in Dosen nicht funktioniert, da es auf Durchleuchtung eines Objekts beruht.

Es wäre wünschenswert, ein Verfahren zur Verfügung zu stellen, welches die Detektion sowohl von polarisierenden als auch nicht polarisierenden Folien innerhalb von Dosen ermöglicht.

Das Problem bei derartigen Inspektionsverfahren ergibt sich durch die Dosen. Diese bestehen oft aus einem glänzenden Metall und bilden einen spiegelnden Innenkörper. Wenn Licht eingestrahlt wird, wird es an der Innenwandung mehrfach reflektiert, was eine sehr diffuse Ausleuchtung erzeugt und daher für die normale Fremdkörperdetektion wünschenswert ist. Hierbei ändert es ständig seine Richtung und auch die Richtung der Polarisation. Dadurch wird, selbst wenn polarisiertes Licht eingestrahlt wird, dessen Polarisation schnell zerstört. Die Anmelderin hat ermittelt, dass insbesondere die Seitenwände, beispielsweise runde Seitenwände sehr stark zur Depolarisation beitragen.

Im Stand der Technik wird üblicherweise die gesamte Dose ausgeleuchtet und damit wird das Licht immer stark depolarisiert. Selbst eine Inspektion von stark polarisierenden Folien ist dadurch praktisch unmöglich und erst recht sind schwach polarisierende Folien noch schwerer zu erkennen.

Eine Möglichkeit der Vorgehensweise bestünde darin, neuartige Polarisationskameras einzusetzen, welche gleichzeitig Bilder mit 0°, 45°, 90° und 135° linearer Polarisation aufnehmen. Allerdings ergab sich in Untersuchungen der Anmelderin, dass auch eine derartige Kamera nicht ohne polarisierte Beleuchtung Folien erkennen kann. Selbst mit polarisiertem Licht können diese Kameras praktisch nichts beobachten, wenn weiterhin auch die Dosenwand inspiziert werden soll und auch schwach polarisierende Folien erkannt werden sollen. So wurden Experimente durchgeführt, aus denen sich ergab, dass allenfalls eine stark polarisierende Folie erkannt werden konnte. Bei einer weiteren experimentellen Vorgehensweise wurde mit gekreuzten Polfiltern aufgenommen. Auch hierfür konnte praktisch kein Dunkelfeld-Verfahren durchgeführt werden und auch hier waren die entsprechenden Folien kaum zu sehen. Für die durchgeführten Experimente wurden sowohl stark polarisierende als auch schwach polarisierende als auch nicht polarisierende Folienstücke innerhalb der Dosen verwendet.

Es konnten jeweils nur die stark polarisierenden Folien erkannt werden.

Aus der EP 0362679 ist eine Vorrichtung und ein Verfahren zum Inspizieren der Innenoberfläche von Dosen bekannt. Dabei wird ein Zirkularpolarisator eingesetzt.

Die WO 2019/072989 A1 beschreibt eine Vorrichtung zum Inspizieren von Dosen. Dabei ist eine Beleuchtungseinrichtung zwischen einer Beobachtungseinrichtung und einem Objektiv angeordnet.

Ausgehend von dem Stand der Technik stellt sich die Aufgabe, eine Inspektionsvorrichtung bzw. ein Inspektionsverfahren insbesondere zum Inspizieren von Behältnissen wie Dosen zu schaffen, welches auch unterschiedliche Objekte, insbesondere unterschiedliche transparente Objekte mit unterschiedlicher Polarisation erfassen kann. Dies wird erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung zum Inspizieren von Behältnissen und insbesondere von Dosen weist eine Transporteinrichtung auf, welche die Behältnisse entlang eines vorgegebenen Transportpfads transportiert und eine Beleuchtungseinrichtung, welche die zu inspizierenden Behältnisse beleuchtet. Dabei strahlt die Beleuchtungseinrichtung Strahlung und insbesondere Licht durch eine Öffnung des Behältnisses auf eine Bodeninnenwandung des Behältnisses ein. Weiterhin weist die Vorrichtung eine Bildaufnahmeeinrichtung auf, welche wenigstens ein ortsaufgelöstes Bild, der von der Beleuchtungseinrichtung auf die Bodeninnenwandung eingestrahlten und von der Bodeninnenwandung reflektierten bzw. zurückgestreuten Strahlung aufnimmt und/oder welche ein ortsaufgelöstes Bild der von der Beleuchtungseinrichtung beleuchteten Bodeninnenwandung aufnimmt.

Erfindungsgemäß weist die Vorrichtung einen Strahlengang zwischen einer Lichtquelle der Beleuchtungseinrichtung und der Innenwandung eine erste Polarisatoreinrichtung auf, derart dass die auf die Innenwandung gelangende Strahlung polarisiert ist, wobei die Beleuchtungseinrichtung weiterhin derart ausgebildet ist, dass ein überwiegender Anteil, der von der Beleuchtungseinrichtung in das Behältnis eingestrahlten Strahlung auf die Bodeninnenwandung trifft.

In zeitintensiven und umfangreichen Untersuchungen konnte der Erfinder feststellen, dass ein Kontrast von durchsichtigen Plastikteilen in Dosen verbessert wird, wenn die Beleuchtungseinrichtung weiter weg von dem Behältnis positioniert ist und dadurch eine höhere Richtwirkung erreicht. Aus diesem Grunde wurden Experimente durchgeführt, bei denen eine entsprechende Beleuchtung des Behältnisses bzw. einer Dose relativ weit von dem Behältnis positioniert wurde. Es wurde ermittelt, dass die Erkennung von Folien sich zwar verbessert aber noch nicht zufriedenstellend ist. In weiteren Experimenten zeigte sich, dass einige der verwendeten Folien nur leicht oder nicht polarisierend wirken.

Damit gingen die Erfinder einen anderen Weg, um auch derartige Folien zu erkennen. Zunächst wurde ein definiert polarisiertes Licht eingesetzt.

Weiterhin wurde die Anordnung derart modifiziert, dass ein stark gerichtetes polarisiertes Licht so in das Behältnis bzw. die Dosen eingestrahlt wurde, dass es im Wesentlichen nur die Bodeninnenwandung, bzw. den Dosendom und praktisch nicht die Dosenwand beleuchtet. Teilweise weist die Bodeninnenwandung einen Verlauf auf, der grob horizontal ist. Auf diese Weise wird viel Strahlung bzw. viel Licht mit nur einer Reflektion wieder aus der Dosenmündung heraus reflektiert. Linear polarisiertes Licht behält dabei seine Polarisationsrichtung. Zirkular polarisiertes Licht wechselt durch diesen Vorgang nur seine Drehrichtung. Auf diese Weise ist es wie unten genauer beschrieben möglich, auch empfindliche Dunkelfeld-Verfahren durchzuführen.

Bevorzugt ist damit die erfindungsgemäße Vorrichtung dazu geeignet und bestimmt, Dunkelfeld-Inspektionsverfahren durchzuführen. Bevorzugt ist die Vorrichtung daher derart ausgebildet, dass ein Bild im Wesentlichen der bestrahlten, bzw. der beleuchteten Innenwandung aufgenommen wird. Insbesondere bei der auf den Innenraum der Behältnisse bzw. Dosen ausgestrahlten Strahlung gelangt ein geringer Teil auf die Wandungen der entsprechenden Dosen. Wie oben erwähnt, handelt es sich bei den Behältnissen bevorzugt um Dosen und/oder um Behältnisse mit einer nicht transparenten Wandung und/oder einer lichtreflektierenden Wandung.

Besonders bevorzugt gelangen wenigstens 60 % der Gesamtintensität der eingestrahlten Strahlung und insbesondere der in das Innere des Behältnisses gelangenden Strahlung, bevorzugt wenigstens 70 %, bevorzugt wenigstens 80 % und bevorzugt wenigstens 90 % (der in das Innere des Behältnisses gelangenden Strahlung) auf die Bodeninnenwandung des Behältnisses. Bevorzugt gelangen höchstens 40 %, bevorzugt höchstens 30 %, bevorzugt höchstens 20 % und bevorzugt höchstens 10 % der ausgegebenen bzw. eingestrahlten Strahlung auf eine Seitenwand des Behältnisses.

Besonders bevorzugt gelangt nur ein geringer Teil der aus dem Behältnis insgesamt zurück reflektierten Strahlung entlang seines Strahlungspfades auf eine Seitenwand des Behältnisses. Dies beruht auch darauf, dass die eingestrahlte Strahlung gegebenenfalls noch auf die Innenwandung des Behältnisses gelangen kann, nicht mehr jedoch die hiervon weiter reflektierte Strahlung zu der Bildaufnahmeeinrichtung. Bevorzugt gelangen höchstens 20 %, bevorzugt höchstens 15 % und bevorzugt höchstens 10 % der in das Behältnis eingestrahlten Strahlung auch über eine Reflektion an einer Innenwandung letztlich auf die bzw. zu der Beobachtungseinrichtung.

Bevorzugt handelt es sich bei dem Behältnis um ein Behältnis, welches nach oben offen ist. Dabei kann beispielsweise das Behältnis eine Dose sein, deren Öffnung noch geöffnet ist, weil ein Deckel erst danach eingesetzt wird. Bevorzugt ist ein Querschnitt einer Öffnung, durch welche das Behältnis beleuchtet ist, geringfügig geringer als ein Grundkörper des Behältnisses. So kann beispielsweise ein Querschnitt der Öffnung zwischen 80 % und 99 % des Querschnitts des Behältnisses betragen. Bevorzugt ist das Behältnis aus einem metallischen Material, beispielsweise aus Weiß- oder Aluminiumblech hergestellt.

Bei einer bevorzugten Ausführungsform weist die Vorrichtung eine Trigger- und/oder Steuereinrichtung auf, welche eine Bildaufnahme und die Beleuchtung gemeinsam triggert.

Bevorzugt handelt es sich bei der Transporteinrichtung um ein Transportband, auf dem die Behältnisse stehend gefördert werden. Besonders bevorzugt fördert die Transporteinrichtung die Behältnisse geradlinig (bzw. in einer geradlinigen Richtung). Besonders bevorzugt werden die Behältnisse einbahnig transportiert.

Besonders bevorzugt ist die Vorrichtung derart konzipiert, dass die Strahlung nur ein Mal reflektiert wird, insbesondere an der Bodeninnenwandung und danach auf die Bildaufnahmeeinrichtung trifft.

Bei einer weiteren vorteilhaften Ausführungsform ist die erste Polarisatoreinrichtung dazu geeignet und bestimmt, linear polarisierte oder zirkular polarisierte Strahlung bzw. linear oder zirkular polarisiertes Licht zu erzeugen.

Bei einer weiteren vorteilhaften Ausführungsform weist die Vorrichtung eine Bildauswerteeinheit auf, welche die von der Bildaufnahmeeinrichtung aufgenommenen Bilder auswertet. Dabei ist es möglich, dass die Vorrichtung eine Vergleichseinrichtung aufweist, welche die aufgenommenen Bilder mit Referenzbildern vergleicht. Weiterhin ist es möglich, dass die Vorrichtung eine künstliche Intelligenz (KI) zum Auswerten der Bilder einsetzt.

Bevorzugt wird wenigstens eines der aufgenommen Bilder ausgewertet, um auf Fremdkörper innerhalb des Behältnisses zu schließen. Dabei kann eine entsprechende Auswertung mittels Algorithmen erfolgen oder auch unter dem Einsatz von künstlicher Intelligenz.

Genauer kann eine Erkennung beispielsweise von unterschiedlich polarisierenden Folien mittels einer konventionellen Algorithmik erfolgen oder aber auch unter Verwendung eines neuronalen Netzes für die Bildverarbeitung. Dabei kann bevorzugt ein Convolutional Neuronal Network (CNN) Einsatz finden. Dieses kann nach einem Training mit geeigneten und hochwertig annotierten Kamerabildern eine höhere Trennschärfe ermöglichen.

Weiterhin ist es möglich, dass eine Vielzahl von Referenzbildern insbesondere in einer Speichereinrichtung abgelegt ist und es ist bevorzugt eine Vergleichseinrichtung vorgesehen, die diese abgelegten Bilder mit aufgenommenen Bildern vergleicht. Anhand dieses Vergleiches kann auf das Vorhandensein auch unterschiedlich polarisierender Folien oder auch anderer Fremdkörper geschlossen werden.

Bevorzugt nimmt die Bildaufnahmeeinrichtung wenigstens ein ortsaufgelöstes Bild des Behältnisbodens und/oder des Behältnisses auf. Bevorzugt erzeugt die Bildaufnahmeeinrichtung zur Erfassung des Behältnisses örtlich aufgelöste (insbesondere 2D- und/oder 3D-) Sensordaten (von dem Behältnisboden).

Bevorzugt werden Auswertedaten aus den Sensordaten, insbesondere unter Verwendung einer Prozessoreinrichtung und/oder Datenverarbeitungseinrichtung, mittels Anwendung wenigstens eines (computerimplementierten) Computer-Vision-Verfahrens erzeugt, in welchem (computer-implementierte) Wahrnehmungs- und/oder Erfassungsaufgaben ausgeführt werden, beispielsweise (computer-implementierte) 2D- und/oder 3D-Objekterkennungsverfahren und/oder (computer-implementierte) Verfahren zur (computer-implementierten) semantischen Segmentierung und/oder (computer-implementierten) Objektklassifizierung ("Image classification") und/oder (computer-implementierten) Objektlokalisierung.

Dabei wird bei der Objektklassifizierung das in den Sensordaten erfasste und/oder dargestellte Objekt einer (vorher eingelernten und/oder vorgegebenen) Klasse zugeordnet. Bei einer Objektlokalisierung wird insbesondere zusätzlich zu einer Objektklassifizierung ein Ort eines in den Sensordaten erfassten und/oder dargestellten Objekts (beispielsweise einer Folie (insbesondere in Bezug auf die Sensordaten) bestimmt bzw. ermittelt, welcher insbesondere durch eine sogenannte Bounding Box markiert und/oder hervorgehoben wird. Bei der semantischen Segmentierung wird insbesondere jedem Pixel der Sensordaten eine Klasse (zur Klassifizierung eines Objekts) (insbesondere aus einer insbesondere vorgegebenen Vielzahl von Klassen) zugeordnet (Klassen-Annotation).

Bei den Klassen kann es sich beispielsweise (unter anderem) um Verschmutzungsarten (etwa Folien mit unterschiedlichen Polarisationseigenschaften) handeln.

Bevorzugt basiert die Ermittlung der Auswertedaten aus den von der Sensoreinrichtung erzeugten (Roh-)Daten oder hieraus abgeleiteter Daten (insbesondere die Ausführung von Computer-Vision-Verfahren bzw. Wahrnehmungsverfahren) auf (computer-implementierten) Verfahren des maschinellen Lernens, bevorzugt auf wenigstens einem (künstlichen) neuronalen Netzwerk basierenden Verfahren des maschinellen Lernens. Ein solches neuronales Netzwerk kann beispielsweise als tiefes neuronales Netzwerk (Deep Neural Network, DNN) und/oder ein sogenanntes Convolutional Neural Network (CNN) (dt. Faltungsnetzwerk) und/oder ein rekurrentes Neuronales Netzwerk (RNN, engl. Recurrent Neural Network) ausgestaltet sein.

Die Auswerteeinrichtung zur Auswertung kann dabei in die Inspektionseinrichtung integriert sein oder aber auch in eine übergeordnete Maschinensteuerung. Bevorzugt ist die insbesondere intelligente, Auswerteeinrichtung in der Lage, über moderne Algorithmen (KI, d. h. Künstliche Intelligenz, machine learning (maschinelles Lernen), deep learning etc.) eine Beurteilung eines Vorhandenseins eines Fremdkörpers vorzunehmen. Bevorzugt weist die Auswerteeinrichtung einen Prozessor und/oder eine Speichereinrichtung auf. Bevorzugt ist die Auswerteeinrichtung dazu geeignet und bestimmt, eine prädiktive Vorhersage in Hinblick auf ein Vorhandensein von Folien oder anderen Fremdkörpern zu treffen.

Wenn zirkular polarisiertes Licht eingestrahlt wird, kann eine Lichtquelle wie eine Lampe durch das gleiche Zirkularfilter strahlen, durch welches auch die Bildaufnahmeeinrichtung bzw. Kamera blickt. Da bei der Reflektion an der Bodeninnenwandung das Licht seine Drehrichtung von beispielsweise linkszirkular auf rechtszirkular ändert, wird die zurückgestrahlte Strahlung bzw. das zurückgestrahlte Licht durch den Linkspolfilter abgeblockt. Dabei bleibt das Bild insgesamt dunkel, es sei denn, dass zum Beispiel polarisationsverändernde Folien eine Störung erzeugen.

Mit entsprechenden Aufnahmen konnte belegt werden, dass insbesondere stark polarisierende Folien und auch schwach polarisierende Folien auf dem jeweiligen Bild gut zu sehen sind und damit auch gut auszuwerten sind. Bei einer nicht polarisierenden Folie sind hingegen nur Artefakte sichtbar. Auch kann es sich bei den zu erkennenden Folien um an sich nicht polarisierende Folien handeln, die gerissen oder gezogen wurden und dadurch an den entsprechenden Stellen polarisierend werden. Diese polarisierenden Stellen können ebenfalls sichtbar sein.

Zirkulares Licht bzw. zirkulare Strahlung hat den Vorteil, dass Fremdkörper und insbesondere Folien in allen Drehlagen gleich abgebildet und erkannt werden können. Hierzu ist lediglich eine Inspektionsstation erforderlich.

Bevorzugt dient die hier beschriebene Inspektionsvorrichtung zum Erkennen von Fremdkörpern innerhalb des Behältnisses und insbesondere zum Erkennen von transparenten Fremdkörpern innerhalb des Behältnisses.

Der Nachteil von zirkular polarisiertem Licht ist jedoch, dass oftmals die Bodeninnenwandung etwas rau ist und nicht optisch eben wie ein richtiger Spiegel. Dadurch dunkeln zirkulare Polfilter nicht vollständig bzw. perfekt ab.

So wurden Bilder aufgenommen, bei denen beispielsweise ein hellerer Streifen senkrecht zu einer Bürstungsrichtung des Innenbodens auftritt. Derartige Streifen könnten jedoch im Rahmen der Bildauswertung ausgeblendet werden, wozu sich wiederum wie unten genauer beschrieben eine künstliche Intelligenz (KI) eignen würde.

Bei der Verwendung von linear polarisiertem Licht und einem Kamerapolfilter in einer vorgegebenen Richtung und insbesondere in einer 90° Sperrrichtung wird die Innenwandung des Behältnisses besser abgedunkelt. Auch ein heller Streifen senkrecht zu einer Dosenbodendombürstung ist kaum zu sehen. Damit wird eine Folienerkennung verbessert und erleichtert.

Ein Nachteil bei der Verwendung von linear polarisiertem Licht besteht aber darin, dass in dem Fall in dem die Folien eine Polarisationsachse aufweisen, welche parallel oder senkrecht zu den Richtungen der Polfilter verläuft, die Folien nicht hell aufleuchten. Daher verwendet man bei linear polarisiertem Licht zwei um 45° verdrehte Inspektionsstationen, damit auch sicher alle Folienelemente erkannt werden können. Bei einer bevorzugten Ausführungsform weist also die hier beschriebene Vorrichtung zwei Stationen der hier oben beschriebenen Art auf. Diese beiden Stationen können dabei in der Transportrichtung der Behältnisse hintereinander angeordnet sein.

So ist es möglich, dass ein erstes Bild aufgenommen wird, bei dem zwei schwach polarisierenden Folien wegen einer ungünstigen Drehlage nur schwach zu sehen sind, während sie nach einer 45° Drehung jeweils gut zu erkennen sind.

Bei einer weiteren vorteilhaften Ausführungsform schließt die von der Beleuchtungseinrichtung auf die Bodeninnenwandung eingestrahlte Strahlung in einer bezüglich der Bodeninnenwandung senkrecht stehenden Richtung (bei der es sich insbesondere auch um eine Längsrichtung handelt, in der sich die Wandung des Behältnisses erstreckt) und/oder einer Längsrichtung des Behältnisses einen Winkel ein, der geringer ist als 30°, bevorzugt geringer als 25°, bevorzugt geringer als 20°, bevorzugt geringer als 15° und besonders bevorzugt geringer als 10°. Damit wird bevorzugt die Strahlung bzw. das Licht unter einem sehr flachen Winkel (d. h. insbesondere einem sehr kleinen Winkel bezogen auf eine Längsachse des Behältnisses) bezüglich der Längsrichtung des Behältnisses eingestrahlt. Auf diese Weise kann sichergestellt werden, dass nur sehr wenig Strahlung auf die Seitenflächen des Behältnisses trifft.

Bei einer weiteren bevorzugten Ausführungsform weisen die Beleuchtungseinrichtung und/oder die Bildaufnahmeeinrichtung von einer Mündung der Dose einen Abstand auf, der größer ist als 100 mm, bevorzugt größer als 200 mm, bevorzugt größer als 300 mm, bevorzugt größer als 400 mm und besonders bevorzugt größer als 500 mm. Durch diese Vorgehensweise kann ebenfalls eine sehr flache (d. h. ein sehr kleiner Winkel bezüglich der Längsrichtung) verlaufende Einstrahlung in Beobachtungsrichtung erreicht werden. Zusätzlich addiert sich für die Ermittlung eines Abstands zu der Bodeninnenwandung noch die Behältnishöhe. Diese kann dabei mehr 100 mm, bevorzugt mehr als 150 mm betragen.

Besonders bevorzugt ist daher ein Abstand zwischen der Beleuchtungseinrichtung und/oder der Bildaufnahmeeinrichtung und der Mündung des Behältnisses geringer als 1400 mm, bevorzugt geringer als 1200 mm, bevorzugt geringer als 1000 mm und besonders bevorzugt geringer als 900 mm und bevorzugt geringer als 800 mm.

Bevorzugt nimmt die Bildaufnahmeeinrichtung das wenigstens eine Bild unter einem Winkel gegenüber einer bezüglich der Bodeninnenwandung senkrecht stehenden Richtung und/oder einer Längsrichtung des Behältnisses auf, der geringer ist als 30°, bevorzugt geringer als 25°, bevorzugt geringer als 20°, bevorzugt geringer als 15° und besonders bevorzugt geringer als 10°.

Damit erfolgt bevorzugt sowohl die Einstrahlung als auch die Beobachtung des Bildes unter einem sehr geringen Winkel gegenüber einer Längsrichtung des Behältnisses. Bei einer weiteren bevorzugten Ausführungsform ist auch zwischen der Bodeninnenwandung und der Bildaufnahmeeinrichtung eine weitere Polarisatoreinrichtung angeordnet. Damit nimmt die Bildaufnahmeeinrichtung das Bild bevorzugt durch diese Polarisatoreinrichtung auf, bzw. der Strahlengang des von der Bodeninnenwandung reflektierten Lichts verläuft auch durch eine (gegebenenfalls weitere) Polarisatoreinrichtung.

Bevorzugt handelt es sich bei der Beleuchtungseinrichtung um eine LED-Spotbeleuchtung, die besonders bevorzugt direkt neben und/oder nahe an der Bildaufnahmeeinrichtung und/oder dem Kameraobjektiv angeordnet ist. Dabei wurde bei einer bevorzugten Ausgestaltung sowohl vor der Beleuchtungseinrichtung als auch vor der Bildaufnahmeeinrichtung bzw. dem Objektiv der Bildaufnahmeeinrichtung ein Polarisationsfilter angeordnet.

Bei den oben genannten Abständen konnten gute Ergebnisse erreicht werden, wenn sowohl die Beleuchtungseinrichtung als auch das Objektiv und/oder die Bildaufnahmeeinrichtung sich an einem Abstand zwischen 500 mm und 700 mm über der Dosenmündung befanden.

Durch die hier beschriebenen Geometrien blicken sowohl die Bildaufnahmeeinrichtung als auch die Beleuchtungseinrichtung nur mit einem kleinen Winkel auf die (insbesondere mittig stehende und/oder transportierte) Dose. Dieser kleine Winkel ist vorteilhaft, damit der Lichtspot möglichst nur die Bodeninnenwandung beleuchtet. Eine stärkere Beleuchtung der Wandung des Behältnisses bzw. der Dose würde das Innere des Behältnisses mit depolarisiertem Licht erleuchten und die Inspektion beeinträchtigen.

Auch für die Bildaufnahmeeinrichtung ist ein kleiner Blickwinkel vorteilhaft, damit sie den gesamten Boden des Behältnisses abbilden bzw. beobachten kann. Dies kann beispielsweise mittels eines Teleobjektivs erreicht werden.

Bei einer besonders bevorzugten Ausführungsform handelt es sich damit bei der Beleuchtungseinrichtung um eine Punktlichtquelle oder eine Spotlichtquelle. Insbesondere wird als Beleuchtungseinrichtung eine LED-Lichtquelle und insbesondere eine LED-Spotlichtquelle verwendet. So kann eine Spotwirkung etwa mittels einer Sammellinse erreicht werden, die in etwa im Abstand ihrer Brennweite vor der Lichtquelle (etwa einer LED) angeordnet ist. Auch diese Weise wird der Brennpunktstrahl ein Parallelstrahl. Von außen betrachtet wirkt damit eine Spotlichtquelle wie eine parallel abstrahlende Fläche, selbst wenn als eigentliche Lichtquelle eine Punktlichtquelle verwendet wird. Bevorzugt wird eine Lichtquelle verwendet, welche im Wesentlichen parallel abstrahlt.

Bevorzugt schließt ein Strahlengang einer Beleuchtungsrichtung mit dem Strahlengang zur Bildaufnahme einen Winkel ein, der geringer ist als 30°, bevorzugt geringer als 25°, bevorzugt geringer als 20°, bevorzugt geringer als 15° und bevorzugt geringer als 10°. Besonders bevorzugt handelt es sich bei einer Lichtquelle um eine LED-Weißlichtquelle.

Bei einer weiteren vorteilhaften Ausführungsform weist die Vorrichtung eine zweite bzw. weitere Beleuchtungseinrichtung auf, welche die Bodeninnenwandung beleuchtet (wobei bevorzugt diese beiden Beleuchtungseinrichtungen hintereinander, etwa mit einem Doppeltrigger ausgelöst werden), wobei die von den beiden Beleuchtungseinrichtungen auf die Bodeninnenwandung eingestrahlten Strahlungen unterschiedliche Polarisationseigenschaften aufweisen. Insbesondere weisen die beiden Strahlungen unterschiedliche Polarisationsrichtungen auf.

Es wäre jedoch auch möglich, dass die Behältnisse mittels mehreren Beleuchtungseinrichtungen gleichzeitig beleuchtet werden, wobei in diesem Falle die von den beiden Beleuchtungseinrichtungen abgegebenen Strahlungen bevorzugt die gleiche Polarisationsrichtung aufweisen.

Bei einer weiteren vorteilhaften Ausführungsform weist die Bildaufnahmeeinrichtung eine Polarisationskamera auf. Eine Polarisationskamera ist eine Kamera, die physikalische Materialeigenschaften sichtbar macht, die sich mit klassischer Visiontechnologie nicht nachweisen lassen. Grundlage ist ein Bildsensor, der Daten zum Polarisationszustand des Lichtes liefert. In diesem Fall ist kein weiterer Polarisator im Strahlengang vor der Kamera erforderlich.

Die Erkennung von Folien kann, wie beschrieben mit zwei Beleuchtungseinrichtungen, mit versetzter Polarisationsrichtung und insbesondere mit 45° versetzter linearer Polarisationsrichtung sowie einer Polarisationskamera (die insbesondere im Doppeltrigger -Betrieb arbeitet also zwei Aufnahmen am (fast) am selben Ort aufnimmt) erfolgen.

Dabei wird bevorzugt in einer ersten Aufnahme die erste Lampe angesteuert und in einer zweiten Aufnahme, die Lampe mit dem zur ersten Lampe gedrehten und insbesondere um 45° gedrehten linearen Polfilter.

Die Doppelbildaufnahme kann innerhalb einer Zeit von längstens 5ms, bevorzugt kleiner 2 ms, bevorzugt kleiner 1 ms und bevorzugt kleiner 0,5 ms erfolgen. Die Drehung des ersten zum zweiten linearen Polarisationsfilter kann von 35-55° und besonders bevorzugt 40-50° betragen. Der Bildaufnahmesensor kann beispielsweise ein Sony Pregius 5.0 IMX250MZR CMOS Sensor sein.

Die vorliegende Erfindung ist weiterhin auf ein Verfahren zum Inspizieren von Behältnissen und insbesondere von Dosen gerichtet, wobei eine Transporteinrichtung die Behältnisse entlang eines vorgegebenen Transportpfads transportiert und eine Beleuchtungseinrichtung die zu inspizierenden Behältnisse beleuchtet und Strahlung durch eine Öffnung des Behältnisses auf eine Bodeninnenwandung des Behältnisses einstrahlt, und eine Bildaufnahmeeinrichtung wenigstens ein ortsaufgelöstes Bild der Bodeninnenwandung (und/oder der von der Bodeninnenwandung reflektierten Strahlung) aufnimmt.

Erfindungsgemäß polarisiert eine in einem Strahlengang zwischen einer Lichtquelle der Beleuchtungseinrichtung und der Bodeninnenwandung vorgesehene erste Polarisatoreinrichtung die auf die Bodeninnenwandung gelangende Strahlung, wobei ein überwiegender Anteil, der von der Beleuchtungseinrichtung in das Behältnis eingestrahlten Strahlung auf die Bodeninnenwandung trifft.

Bei einem bevorzugten Verfahren wird die von der Beleuchtungseinrichtung in das Behältnis eingestrahlte Strahlung (oder ein Großteil dieser Strahlung) nur an der Bodeninnenwandung reflektiert, bevor sie zu der Bildaufnahmeeinrichtung gelangt. Damit findet bevorzugt nur eine Reflektion der zu beobachtenden Strahlung statt. Unter einem Großteil der Strahlung werden bevorzugt wenigstens 60 %, bevorzug wenigstens 70 %, bevorzugt wenigstens 80 % und bevorzugt wenigstens 90 % der in das Behältnis eingestrahlten Strahlung verstanden. Dabei ist es auch möglich, dass ein Teil der in das Behältnis eingestrahlten Strahlung zwar auch an einer Seitenwand reflektiert wird, jedoch insbesondere so, dass die (zumindest auch von der Seitenwandung) reflektierte Strahlung nicht mehr zu der Beobachtungseinrichtung gelangt.

Besonders bevorzugt wird mithilfe dieser Bildaufnahme wenigstens ein in dem Behältnis befindlicher Fremdkörper erfasst und/oder detektiert. Besonders bevorzugt wird ein auf der Bodeninnenwandung liegender Fremdkörper detektiert. Besonders bevorzugt handelt es sich bei dem Fremdkörper um einen wenigstens teilweise transparenten Fremdkörper. Bei einem besonders bevorzugten Verfahren handelt es sich bei dem Fremdkörper um einen folienartigen Fremdkörper.

Bei einem weiteren bevorzugten Verfahren nimmt die Beleuchtungseinrichtung auf die Bodeninnenwandung eingestrahlte und von der Bodeninnenwandung reflektierte Strahlung auf.

Besonders bevorzugt erfolgt eine Bildaufnahme während einer Bewegung des Behältnisses in der Transportrichtung.

Besonders bevorzugt erzeugt die Polarisatoreinrichtung linear oder zirkular polarisiertes Licht, welches anschließend auf die Bodeninnenwandung gelangt. Bei einem besonders bevorzugten Verfahren trifft ein Großteil der von der Beleuchtungseinrichtung auf das Behältnis eingestrahlten Strahlung auf die Bodeninnenwandung. Besonders bevorzugt wird auch ein Großteil der auf die Innenwandung eingestrahlten Strahlungen innerhalb des Behältnisses nur ein Mal reflektiert.

Besonders bevorzugt wird wie oben erwähnt ein geringer Einstrahlwinkel gegenüber einer auf der Bodeninnenfläche senkrecht stehenden Richtung und insbesondere einer Längsrichtung des Behältnisses gewählt.

Besonders bevorzugt handelt es sich bei dem Großteil der eingestrahlten Strahlung um wenigstens 60 %, bevorzugt um wenigstens 65 %, bevorzugt um wenigstens 70 %, bevorzugt um wenigstens 75 %, bevorzugt um wenigstens 80 %, bevorzugt um wenigstens 85 % und besonders bevorzugt um wenigstens 90 % der eingestrahlten Strahlung.

Bei einer weiteren vorteilhaften Ausführungsform wird aufgrund des von der Bildaufnahmeeinrichtung aufgenommenen Bildes auf das Vorhandensein von Folienelementen innerhalb des Behältnisses geschlossen.

Bevorzugt wird daher das von der Bildaufnahmeeinrichtung aufgenommene Bild mittels einer Auswerteeinrichtung ausgewertet.

Bei einem weiteren bevorzugten Verfahren gelangt von der Innenwandung reflektierte Strahlung durch eine Polarisatoreinrichtung bzw. tritt durch die Polarisatoreinrichtung, bevor sie zu der Bildaufnahmeeinrichtung gelangt.

Besonders bevorzugt handelt es sich bei dem Beobachtungsverfahren um eine Dunkelfeld-Methode. Dabei ist es möglich, dass diese Dunkelfeld-Methode sich daraus ergibt, dass Strahlung zwei Mal polarisiert wird, bzw. zwei Mal durch unterschiedliche Polarisationsfilter verläuft.

Weitere Vorteile und Ausführungsformen ergeben sich aus den beigefügten Zeichnungen:

Darin zeigen:
- Fig. 1: eine erste Ausgestaltung der erfindungsgemäßen Vorrichtung;
- Fig. 2: eine zweite Ausgestaltung der erfindungsgemäßen Vorrichtung;
- Fig. 3: eine dritte Ausführungsform der erfindungsgemäßen Vorrichtung.

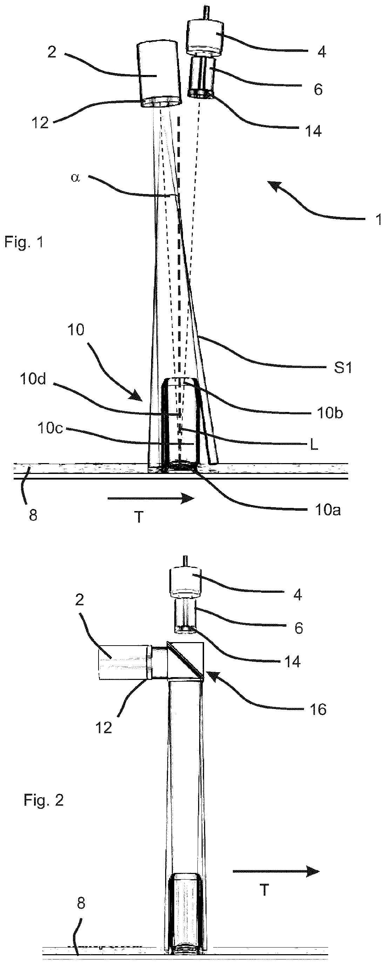

Figur 1 zeigt eine schematische Darstellung einer erfindungsgemäßen Vorrichtung 1 zum Inspizieren von Behältnissen 10. Bei den Behältnissen 10 handelt es sich hier um noch offene Dosen, welche eine Bodeninnenwand 10a, eine Seiteninnenwand 10c, einen Innenraum 10d und eine Öffnung 10b aufweisen. Das Bezugszeichen S1 kennzeichnet die von der Beleuchtungseinrichtung 2 ausgegebene Strahlung.

Das Bezugszeichen 2 kennzeichnet eine Beleuchtungseinrichtung wie etwa einen LED-Spot, der Licht durch eine erste Polarisationseinrichtung 12 auf das Behältnis 10 ausgibt. Aufgrund des geringen Winkels α bezüglich einer Längsrichtung L des Behältnisses wird erreicht, dass ein Großteil der Strahlung auf die Bodeninnenwandung 10a eingestrahlt wird und nur ein geringer Teil auf die Behältnisinnenwandung 10c gelangt.

Das Bezugszeichen 8 kennzeichnet eine Transporteinrichtung, welche die Behältnisse entlang eines Transportpfads T hier in gerader Richtung transportiert. Die Aufnahme bzw. Inspektion erfolgt während dieser Bewegung. Bei dieser Transporteinrichtung 8 kann es sich beispielsweise um ein Transportband handeln. In einem Bereich der Transporteinrichtungen können Sensoreinrichtungen wie etwa Lichtschranken vorgesehen sein, welche eine Position der Behältnisse 10 erfassen und/oder eine Triggerung der Beleuchtungseinrichtung und/oder der Bildaufnahmeeinrichtung ermöglichen.

Das von der Bodeninnenwandung 10a reflektierte Licht wird auch in Richtung einer Bildaufnahmeeinrichtung 4 reflektiert. Das Bezugszeichen 6 kennzeichnet ein Objektiv und das Bezugszeichen 14 eine weitere Polarisatoreinrichtung, welche zum Polarisieren des Lichts dient. Damit durchläuft das von der Beleuchtungseinrichtung ausgestrahlte Licht hier zwei Polarisatoreinrichtungen, bevor es zu der Bildaufnahmeeinrichtung 4 gelangt.

Figur 2 zeigt eine weitere Ausgestaltung der vorliegenden Erfindung. Bei dieser Ausgestaltung wird ein koaxialer Aufbau der Bildaufnahmeeinrichtung und Beleuchtungseinrichtung verwendet. Dabei bezieht sich das Bezugszeichen 16 auf einen Strahlteiler, mittels dem bewirkt werden kann, dass die eingestrahlte und die reflektierte Strahlung zueinander parallel verlaufen. Ein Nachteil dieses Verfahrens besteht darin, dass ein großer Anteil des eingestrahlten Lichts verloren geht, was unvorteilhaft für ein lichtschwaches Dunkelfeld-Verfahren ist.

Daneben kann sich ein Nachteil daraus ergeben, dass derartige Strahlteiler 16 oftmals selbst optisch aktiv sind und die Polarisationsrichtung und Intensität von Licht verändern. Dies bedeutet, dass mit einer herkömmlichen Strahlteiler 16 im Wesentlichen auf eine Zirkularpolfilter-Methode zurückgegriffen wird, bei der sich ein Polarisationsfilter idealerweise unterhalb des Strahlteilers 16 befindet sollte.

Für eine verbesserte Inspektion mit linear polarisiertem Licht wird besonders bevorzugt ein polarisierender Strahlteiler (beispielsweise ein Strahlteilerwürfel) verwendet. Dieser lässt in der richtigen Polarisationsrichtung polarisiertes Licht durch, während senkrecht dazu polarisiertes Licht reflektiert wird. Auf diese Weise treten praktisch keine Verluste bei der Lichtleitung auf. Für ein Dunkelfeld-Verfahren wie es hier beschrieben wurde, empfehlen sich aber weiterhin lineare Polfilter vor der Bildaufnahmeeinrichtung und der Strahlungseinrichtung, da in diesem Falle das Löschungsverhältnis zum polarisierenden Strahlteilern etwas schlechter ist.

Insbesondere können mit der hier beschriebenen Inspektionstechnik auch Fremdkörper wie Folien aufgefunden werden, die sich insbesondere am Boden des Behältnisses befinden. Dabei werden auch schwach oder nicht polarisierende Folien gesehen.

Das hier beschriebene Verfahren kann mit herkömmlichen Bildaufnahmeeinrichtungen bzw. Kameras durchgeführt werden. Dabei ist es nicht unbedingt nötig, neuere und auch relativ teure Polarisationskameras zu nutzen, da sich insbesondere für die Dunkelfeld-Methode kein erheblicher Vorteil ergibt. Es wäre jedoch, wie oben beschrieben, auch möglich, Polarisationskameras einzusetzen.

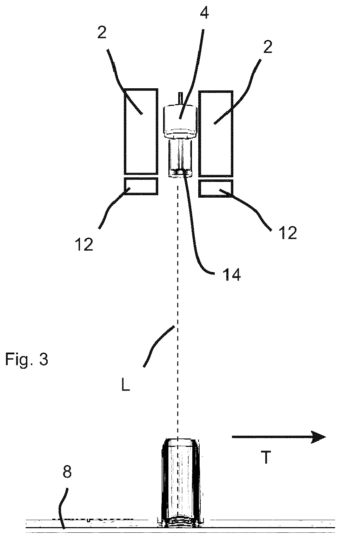

Bei der in Fig. 3 gezeigten Ausführungsform ist die Bildaufnahmeeinrichtung 4 (zum Zeitpunkt der Bildaufnahme) zentral über dem Behältnis 10 angeordnet. Weiterhin sind hier zwei Beleuchtungseinrichtungen 2 (die jeweils bevorzugt als Spotlichtbeleuchtungen ausgeführt sind), seitlich (rechts und links) neben der Bildaufnahmeeinrichtung 4 angeordnet. Auch wäre es möglich, dass mehrere derartiger Beleuchtungseinrichtungen vorgesehen sind. Auch bei dieser Ausgestaltung sind vorteilhaft wieder Polarisatoreinrichtungen vorgesehen, welche das von den Beleuchtungseinrichtungen ausgegebene Licht polarisieren sowie bevorzugt auch eine Polarisatoreinrichtung, welche das von der Bodeninnenwandung reflektierte Licht polarisiert.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung zum Inspizieren von Behältnissen (10) und insbesondere von Dosen (10), mit einer Transporteinrichtung (8), welche die Behältnisse entlang eines vorgegebenen Transportpfads (T) transportiert, mit einer Beleuchtungseinrichtung (2), welche die zu inspizierende Dose (10) beleuchtet und Strahlung durch eine Öffnung des Behältnisses auf eine Bodeninnenwandung des Behältnisses (10) einstrahlt und mit einer Bildaufnahmeeinrichtung (4), welche wenigstens ein ortsaufgelöstes Bild der von der Beleuchtungseinrichtung (2) auf die Bodeninnenwandung eingestrahlten und von der Bodeninnenwandung (10a) reflektierten Strahlung aufnimmt und/oder welche ein ortsaufgelöstes Bild der von der Beleuchtungseinrichtung beleuchteten Bodeninnenwandung aufnimmt,
**dadurch gekennzeichnet, dass**
die Vorrichtung (1) in einem Strahlengang zwischen einer Lichtquelle der Beleuchtungseinrichtung (2) und der Bodeninnenwandung (10a) eine erste Polarisatoreinrichtung (12) aufweist, derart dass die auf die Bodeninnenwandung gelangende Strahlung polarisiert ist, wobei die Beleuchtungseinrichtung derart ausgebildet ist, dass ein überwiegender Anteil der von der Beleuchtungseinrichtung in das Behältnis eingestrahlten Strahlung auf die Bodeninnenwandung trifft.

2. Vorrichtung (1) nach Anspruch 1,
**dadurch gekennzeichnet, dass**
die von Beleuchtungseinrichtung (2) auf die Bodeninnenwandung (10a) eingestrahlte Strahlung mit einer bezüglich der Bodeninnenwandung senkrecht stehenden Richtung einen Winkel einschließt, der geringer ist als 30°, bevorzugt geringer als 25°, bevorzugt geringer als 20°, bevorzugt geringer als 15° und besonders bevorzugt geringer als 10°.

3. Vorrichtung (1) nach wenigstens einem der vorangegangenen Ansprüche,
**dadurch gekennzeichnet, dass**
die Beleuchtungseinrichtung und/oder die Bildaufnahmeeinrichtung von einer Mündung (10b) des Behältnisses einen Abstand aufweisen, der größer ist als 100 mm, bevorzugt größer als 200 mm, bevorzugt größer als 300 mm, bevorzugt größer als 400 mm und besonders bevorzugt größer als 500 mm.

4. Vorrichtung (1) nach wenigstens einem der vorangegangenen Ansprüche,
**dadurch gekennzeichnet, dass**
die Bildaufnahmeeinrichtung das Bild unter einem Winkel gegenüber einer bezüglich der Bodeninnenwandung (10a) senkrecht stehenden Richtung aufnimmt, der der geringer ist als 30°, bevorzugt geringer als 25°, bevorzugt geringer als 20°, bevorzugt geringer als 15° und besonders bevorzugt geringer als 10°.

5. Vorrichtung (1) nach wenigstens einem der vorangegangenen Ansprüche,
**dadurch gekennzeichnet, dass**
zwischen der Bodeninnenwandung (10a) und der Bildaufnahmeeinrichtung eine Polarisatoreinrichtung angeordnet ist.

6. Vorrichtung (1) nach wenigstens einem der vorangegangenen Ansprüche,
**dadurch gekennzeichnet, dass**
die Beleuchtungseinrichtung eine Punktlichtquelle oder eine Spotlichtquelle ist.

7. Vorrichtung (1) nach wenigstens einem der vorangegangenen Ansprüche,
**dadurch gekennzeichnet, dass**
die Vorrichtung (1) eine zweite Beleuchtungseinrichtung aufweist, welche die Bodeninnenwandung (10a) beleuchtet, wobei die von den beiden Beleuchtungseinrichtungen auf die Bodeninnenwandung (10a) eingestrahlten Strahlungen unterschiedliche Polarisationseigenschaften aufweisen.

8. Vorrichtung (1) nach wenigstens einem der vorangegangenen Ansprüche,
**dadurch gekennzeichnet, dass**
die Bildaufnahmeeinrichtung eine Polarisationskamera aufweist.

9. Verfahren zum Inspizieren von Behältnissen (10) und insbesondere von Dosen (10), wobei eine Transporteinrichtung (8) die Behältnisse entlang eines vorgegebenen Transportpfads (T) transportiert und eine Beleuchtungseinrichtung (2) die zu inspizierende Dose (10) beleuchtet und Strahlung durch eine Öffnung des Behältnisses (10) auf eine Bodeninnenwandung (10a) des Behältnisses (10) einstrahlt und eine Bildaufnahmeeinrichtung (4) wenigstens ein ortsaufgelöstes Bild der Bodeninnenwandung (10a) aufnimmt,
**dadurch gekennzeichnet, dass**
eine in einem Strahlengang zwischen einer Lichtquelle der Beleuchtungseinrichtung (2) und der Bodeninnenwandung (10a) vorgesehene erste Polarisatoreinrichtung (12) die auf die Bodeninnenwandung (10a) gelangende Strahlung polarisiert, wobei ein überwiegender Anteil der von der Beleuchtungseinrichtung in das Behältnis (10) eingestrahlten Strahlung auf die Bodeninnenwandung (10a) trifft.

10. Verfahren nach Anspruch 9,
**dadurch gekennzeichnet, dass**
die von der Beleuchtungseinrichtung in das Behältnis eingestrahlte Strahlung nur an der Bodeninnenwandung reflektiert wird, bevor sie zu der Bildaufnahmeeinrichtung gelangt.

11. Verfahren nach wenigstens einem der vorangegangenen Ansprüche 9 - 10,
**dadurch gekennzeichnet, dass**
aufgrund des von der Bildaufnahmeeinrichtung aufgenommenen Bildes auf das Vorhandensein von Folienelementen innerhalb des Behältnisses geschlossen wird.

12. Verfahren nach wenigstens einem der vorangegangenen Ansprüche 9 - 11,
**dadurch gekennzeichnet, dass**
von der Innenwandung reflektierte Strahlung durch eine Polarisatoreinrichtung tritt, bevor sie zu der Bildaufnahmeeinrichtung gelangt.
